# FASCICULE DE BREVET EUROPEEN

(11) **EP 3 983 688 B1**
(45) Date de publication et mention de la délivrance du brevet: **02.08.2023**
(21) Numéro de dépôt: 20734654.5
(22) Date de dépôt: 10.06.2020
(51) Int. Cl.: F16B 39/12, F16B 39/284, F16B 39/32, F16B 21/18

(54) **DISPOSITIF DE FIXATION PAR VISSAGE, AVEC FREINAGE A L'ETAT VISSE**
SCHRAUBBEFESTIGUNG MIT VERRIEGELUNG IM VERSCHRAUBTEN ZUSTAND
SCREW-FIXING DEVICE, WITH LOCKING IN THE SCREWED STATE

(30) Priorité: 13.06.2019 FR 1906293
(43) Date de publication de la demande: 20.04.2022
(73) Titulaire: JPB Système, 77950 Montereau sur le Jard (FR)
(72) Inventeur: MARC, Damien, 77115 BLANDY LES TOURS (FR); MESSAGER, Denis, 77000 MELUN (FR); LE BELLU, Laure, 77270 VILLEPARISIS (FR)
(74) Mandataire: IPAZ
(86) Numéro de dépôt international: PCT/EP2020/066119
(87) Numéro de publication internationale: WO 2020/249629

(56) Documents cités:
- DE-U1-202013 006 947
- GB-A- 332 463
- KR-B1- 101 874 773
- US-A1- 2019 120 279

## Description

La présente invention concerne un dispositif de fixation par vissage comportant des moyens de freinage s'opposant au dévissage inopiné sous l'action notamment des excitations mécaniques telles que vibrations, effets inertiels etc.

Dans un grand nombre d'applications, il est opportun de sécuriser une liaison vissée à l'encontre des dévissages inopinés, lesquels s'accompagnent souvent de risques importants. Tel est tout particulièrement le cas dans l'aéronautique et notamment en ce qui concerne les boulons qui assemblent les deux demi-roues de chaque roue du train d'atterrissage, entre lesquelles est emprisonné le pneu.

On connaît, notamment selon DE 39 35 753 A1, US 2019/00 48 918 A1, US 6,036,236 et WO 2009/001 421 A1, des dispositifs de fixation vissée équipés de systèmes de verrouillage du type à cliquet ne permettant le verrouillage que dans des positions angulaires discrètes. Or dans certaines applications où un couple de serrage précis doit être respecté, ces systèmes de verrouillage ne conviennent pas car la position angulaire relative correspondant au couple prescrit ne correspond pas forcément à l'une des positions angulaires discrètes permettant le verrouillage.

Les dispositifs de fixation vissée équipés de moyens de freinage évitent ce problème. On connaît les rondelles de freinage d'écrou qui agissent automatiquement lorsque l'écrou atteint l'état serré. On connaît également les écrous comportant des moyens de freinage dans l'alésage fileté, ou encore les écrous qui sont partiellement déformés, en particulier ovalisés, pour générer du frottement lors de la rotation de vissage. Ces systèmes connus perdent rapidement de l'efficacité après un petit nombre de cycles de vissage-dévissage.

Le CN 105 485 129 A décrit un écrou prolongé axialement par un collet fileté intérieurement. Des entailles axiales subdivisent le collet en plusieurs mâchoires de freinage capables de fléchir autour d'un axe sensiblement tangentiel. Un anneau à mémoire de forme entoure le collet et enserre celui-ci autour de la vis dans certaines conditions de température. L'anneau doit exercer des efforts très élevés pour assurer cette fonction.

Le DE 33 20 679 A1 décrit en référence à la Figure 94 un dispositif semblable mais où l'effort de freinage est assuré par une douille conique intérieurement, vissée dans une coupelle rapportée. De nombreuses pièces additionnelles sont nécessaires, l'opération de freinage est fastidieuse et les risques de desserrage de la douille et de perte de la douille et de la coupelle ne semblent pas écartés.

Le DE 10 2017 213 047 A1 prévoit un filetage femelle non pas dans un corps d'écrou mais dans une douille rapportée, déformable. Pour le freinage, une vis transversale vient solliciter radialement la douille déformable. Ces moyens de freinage nécessitent une refonte complète du dispositif de vissage, et n'excluent pas un desserrage de la vis transversale.

Le US 2019/012 0279 A1 décrit d'autres dispositifs à douille déformable.

Le US 2016/02 29 226 A1 illustre une roue de train d'atterrissage formée de deux demi-roues assemblées par des boulons. La sécurisation de la liaison est assurée par des fils traversant des perçages transversaux de la vis.

Le GB 332 463 A décrit un dispositif de fixation par vissage avec freinage où une mâchoire de freinage configurée et positionnée pour venir en appui sur le filetage complémentaire s'étend en direction sensiblement circonférentielle relativement à l'axe de vissage, entre une extrémité d'attache reliée à un corps et une extrémité qui est flottante selon une direction radiale.

L'invention vise un dispositif de fixation par vissage avec freinage à l'état vissé, comprenant :
▪ un corps présentant une surface cylindrique filetée destinée à venir en prise de filetage avec un filetage complémentaire ;
▪ au moins une mâchoire reliée au moins indirectement au corps et présentant une surface de freinage sur son côté tourné en service vers le filetage complémentaire, configurée et positionnée pour venir en appui de freinage sur le filetage complémentaire, l'au moins une mâchoire s'étendant en direction sensiblement circonférentielle relativement à l'axe de la surface cylindrique, entre une extrémité d'attache reliée au corps et une extrémité qui est flottante selon une direction sensiblement radiale. ; et
▪ un organe d'actionnement déplaçable entre des positions de freinage et de libération, pour placer sélectivement la mâchoire dans un état de freinage où la surface de freinage exerce une pression de freinage sur le filetage complémentaire, et respectivement dans un état de libération du mouvement relatif de vissage et dévissage.

Un tel dispositif est connu du DE 20 2013 006 947 U1. La ou les mâchoires sensiblement circonférentielles peuvent avoir un très faible encombrement axial tout en étant manoeuvrables avec un effort raisonnable et en appliquant sur le filetage un effort de freinage efficace.

Le but de la présente invention est de proposer un dispositif de fixation par vissage assurant un freinage à l'état vissé qui satisfasse au moins en partie les objectifs suivants : assurer un freinage fiable même après plusieurs cycles de vissage dévissage, être simple à utiliser, mettre en oeuvre des efforts d'actionnement modérés, ne pas nécessiter de conception particulière de la liaison vissée proprement dite ni des organes à fixer grâce à cette fixation, ne pas nécessiter de composants ou accessoires risquant d'être égarés, ne pas endommager les filetages, ne pas exiger de modification de l'organe portant le filetage complémentaire, et n'ayant qu'une incidence minime sur le poids et l'encombrement du dispositif de fixation.

Suivant l'invention, le dispositif de fixation est caractérisé en ce que l'organe d'actionnement est une bague montée en rotation par rapport au corps autour de l'axe de la surface cylindrique filetée. Ainsi une simple rotation de la bague permet de mettre le dispositif de fixation à l'état de freinage ou au contraire à l'état de libération.

Dans une version, l'organe d'actionnement est configuré pour exercer sur un côté de la mâchoire opposé à la surface de freinage une force dirigée en service vers le filetage complémentaire, le retour de la mâchoire en état de libération s'opérant par élasticité.

Suivant une réalisation, l'organe d'actionnement sollicite la mâchoire en flexion pour le passage de l'état de libération à l'état de freinage. La mâchoire circonférentielle selon l'invention oppose notamment beaucoup moins de résistance à la flexion que les pattes axiales de certains documents antérieurs discutés ci-dessus.

Dans une réalisation avantageuse, au moins à l'état de freinage la surface de freinage de la mâchoire est plus proche de l'extrémité d'attache de la mâchoire qu'une zone d'interaction entre la mâchoire et l'organe d'actionnement, de façon à faire travailler la mâchoire en flexion entre la surface de freinage et la zone d'interaction lorsque la mâchoire est à l'état de freinage. On a ainsi sur la mâchoire un effet de levier avantageux qui réduit l'effort d'actionnement requis par rapport à la force pressante voulue pour le freinage. En outre, la zone de flexion entre l'organe d'actionnement et la surface de freinage sert de limiteur de pression entre la surface de freinage et le filetage complémentaire. Ceci protège le dispositif de fixation.

De préférence mais non limitativement, l'extrémité d'attache de la mâchoire est reliée rigidement au corps. Dans une version, la mâchoire et le corps sont venus d'une seule pièce de matériau en étant reliés ensemble à l'extrémité d'attache de la mâchoire. On simplifie ainsi la fabrication tout en rendant la réalisation particulièrement robuste.

Dans une réalisation, la surface de freinage de la mâchoire appartient à la surface cylindrique filetée. Ainsi à l'état de freinage la surface de freinage s'emboîte parfaitement contre le filetage complémentaire.

De préférence, pour faciliter et fiabiliser les opérations de maintenance, l'organe d'actionnement est relié de manière permanente au corps ou d'une manière ne permettant le démontage qu'avec un outil. Ainsi l'organe d'actionnement est imperdable en utilisation, relativement au corps.

La bague est de préférence configurée en capot de protection de l'au moins une mâchoire.

Dans un mode de réalisation, la bague est maintenue axialement relativement au corps au moyen d'un anneau d'arrêt. Cette disposition est avantageuse sur le plan de l'encombrement. En outre, l'accès à l'anneau d'arrêt qui permettrait de démonter la bague est dissimulé ou impossible ce qui évite toute intervention, en particulier tout démontage, nuisible à la sécurité attendue du dispositif de fixation selon l'invention.

Pour son positionnement axial relativement au corps, il peut être prévu que l'anneau d'arrêt se loge partiellement dans un interstice ménagé entre la mâchoire et le reste du corps. Cette solution est avantageuse en termes d'usinage et de gain d'encombrement.

Dans une version l'anneau d'arrêt est immobilisé à l'encontre des rotations par rapport à l'un du corps et de la bague, et comporte au moins une saillie qui coopère avec au moins un évidement prévu dans l'autre du corps et de la bague, de façon à limiter la course angulaire de la bague par rapport au corps. Cette solution permet à l'anneau d'arrêt d'assurer à la fois l'immobilisation axiale de la bague et la limitation de sa course en rotation. Selon un développement avantageux de cette version, l'évidement comporte au moins un bossage que la saillie peut franchir par élasticité à la manière d'un point dur. Ce point dur stabilise la position angulaire de la bague par rapport au corps à l'égard des mouvements inopinés dus aux vibrations ou autres perturbations.

De préférence la bague et la mâchoire interagissent par des profils de came respectifs conjugués. Ce mode d'action facilite la génération de l'effort nécessaire pour le freinage, aussi bien en termes de direction que d'intensité.

Dans une version, le profil de came de l'un au moins de la bague et de la mâchoire appartient à une ellipse respective centrée sur l'axe de la surface cylindrique.

Dans une autre version ou la même, les profils conjugués définissent un point dur pour le mouvement de la bague entre ses positions de freinage et de libération.

D'une manière générale, l'intérêt d'un tel point dur dans le mouvement de l'organe d'actionnement a été exposé plus haut. Le point dur est réalisable de différentes manières en plus de celles déjà exposées.

D'une manière tout aussi générale et non limitative, il est avantageux de prévoir des moyens de butée qui limitent le mouvement de l'organe d'actionnement dans ses déplacements lui permettant d'occuper ses positions de freinage et respectivement de libération. Avantageusement, ces moyens de butée peuvent comprendre une surépaisseur de l'organe d'actionnement, intercalée entre deux extrémités de mâchoire. Il s'agit ici d'empêcher radicalement toute erreur de manipulation par laquelle une force d'actionnement excessive conduirait l'organe d'actionnement au-delà de sa course normale.

Toujours de manière générale et non-limitative, le dispositif comprend avantageusement des moyens indicateurs de la position de l'organe d'actionnement.

Dans une version, le dispositif comprend un système d'enclenchement qui immobilise l'organe d'actionnement dans chacune de ses positions, de freinage et respectivement de libération, par rapport au corps. Il s'agit ici de stabiliser l'organe d'actionnement à l'encontre des excitations mécaniques parasites, pour éviter son changement de position spontané et/ou pour éviter qu'il oscille d'une façon inquiétante pouvant donner l'impression d'une anomalie. Dans une réalisation le système d'enclenchement comprend une dent qui se déplace entre deux butées et, entre les deux butées, un bossage que la dent peut franchir par déformation élastique, ce qui constitue une autre manière de réaliser le point dur dont la fonction est déjà discutée plus haut. Dans chaque position, de freinage et respectivement de libération, de l'organe d'actionnement, la dent est immobilisée entre une butée précitée et le bossage.

Typiquement le dispositif de fixation est un écrou.

Dans une réalisation le corps comporte une paroi tubulaire portant intérieurement la surface cylindrique filetée, et l'au moins une mâchoire est au moins en partie définie par enlèvement de matière dans ladite paroi tubulaire.

De préférence, mais non-limitativement, le dispositif de fixation porte en un seul ensemble autonome le corps avec sa surface cylindrique filetée, l'au moins un organe de verrouillage et l'organe de commande. Ainsi réalisé, le dispositif selon l'invention s'utilise comme un dispositif de fixation classique, sauf qu'il suffit de faire passer l'organe d'actionnement en position de freinage après le vissage, ou en position de libération avant le dévissage. Aucune manipulation complexe n'est nécessaire, aucun assemblage supplémentaire n'est à réliser.

Dans une version, l'au moins une mâchoire comprend plusieurs mâchoires réparties autour de l'axe de la surface cylindrique filetée. L'organe d'actionnement est commun à toutes les mâchoires

D'autres particularités et avantages de l'invention ressortiront encore de la description ci-après, relative à des exemples non-limitatifs.

Aux dessins annexés :
[Fig.1] La figure 1 est une coupe axiale partielle d'une liaison boulonnée utilisant un dispositif de fixation selon l'invention ;
[Fig.2] La figure 2 est une vue en perspective d'un premier mode de réalisation d'un écrou selon l'invention;
[Fig.3] La figure 3 est une vue en perspective du corps de l'écrou de la figure 2, avec ses deux mâchoires;
[Fig.4] La figure 4 est une vue partielle en perspective de l'écrou de la figure 2, avec coupe partielle de la bague d'actionnement;
[Fig.5] La figure 5 est une demie-vue de l'écrou en coupe perpendiculaire à l'axe, à l'état de libération;
[Fig.6] La figure 6 est une vue analogue à la figure 5 mais à l'état de freinage; [Fig.7] La figure 7 est une vue partielle en perspective d'un deuxième mode de réalisation de l'invention;
[Fig.8] La figure 8 est une vue partielle d'un troisième mode de réalisation, en coupe dans deux plans axiaux différents;
[Fig.9] La figure 9 est une vue en perspective partielle d'un quatrième mode de réalisation de l'écrou selon l'invention ;
[Fig.10] La figure 10 est une vue en perspective éclatée de l'écrou de la figure 9;
[Fig.11] La figure 11 est une vue axiale schématique illustrant l'écrou de la figure 9 à l'état de libération; et
[Fig.12] La figure 12 est une vue analogue à la figure 11 mais illustrant l'état de freinage.

La description qui précède et celle qui suit doivent être entendues comme contenant non seulement les particularités précises et les combinaisons précises décrites, mais toute particularité ou combinaison plus ou moins généralisée de particularités, même tirée d'une ou plusieurs partie(s) de phrase ou de paragraphe indépendamment des restes de phrase ou de paragraphe, dès lors qu'une telle particularité ou combinaison de particularités peut conférer à l'invention un caractère distinctif et lui permettre de résoudre un problème posé par rapport à l'état de la technique.

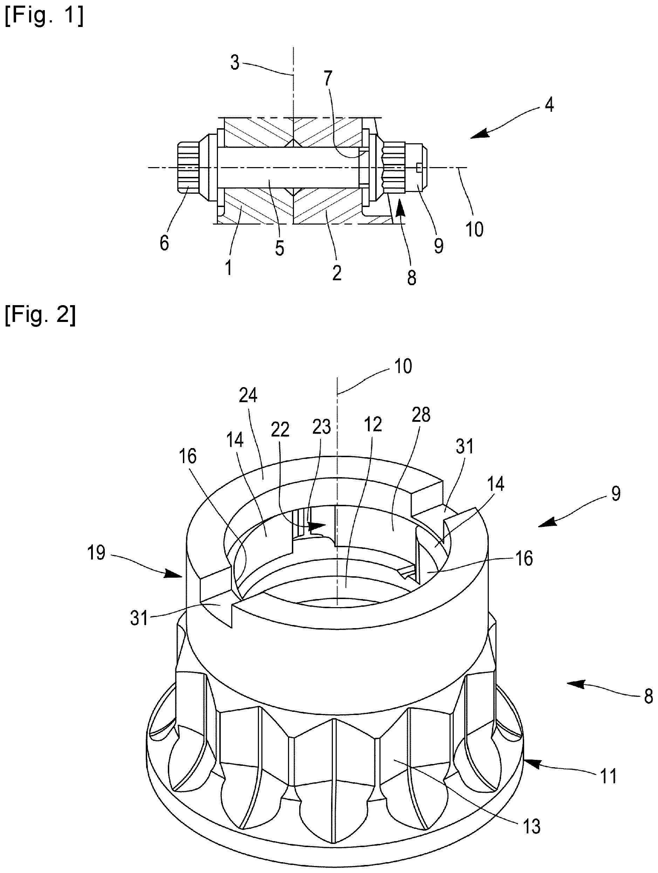

Dans l'exemple représenté à la figure 1, deux pièces 1, 2, partiellement représentées, sont assemblées en appui l'une contre l'autre selon un plan de joint 3 par des boulons 4 (un seul est représenté) s'étendant transversalement au plan de joint 3. Chaque boulon 4 comprend une vis 5 ayant une tête 6 et un filetage 7, et un écrou 8 vissé sur le filetage 7, qu'on appellera « filetage complémentaire ». L'écrou 8 est équipé de moyens de freinage 9 qui coopèrent avec le filetage complémentaire 7 au voisinage de l'extrémité libre de la vis 5. La référence 10 désigne l'axe commun de la vis 5 et de l'écrou 8. La vis 5 est une vis standard pour ce genre d'applications, elle ne comporte aucun moyen spécifique pour le freinage de l'écrou sauf éventuellement un petit supplément de longueur axiale. La structure et la réalisation des moyens de freinage 9 sont donc contraintes par la longueur axiale limitée disponible sur la vis.

Dans l'exemple des figures 2 à 6, l'écrou 8 équipé de moyens de freinage 9 comprend un corps annulaire 11 présentant une surface intérieure cylindrique filetée 12 destinée à venir en prise de filetage avec le filetage complémentaire 7 de la figure 1. Sur son pourtour extérieur le corps 11 présente des conformations de prise 13 pour un outil d'actionnement en rotation lors du vissage et du dévissage (non représenté).

Les moyens de freinage 9 comprennent deux mâchoires 14 reliées au corps 11 et présentant sur leur côté 15 tourné en service vers le filetage complémentaire une surface de freinage 16 configurée et positionnée pour venir sélectivement en appui de freinage sur le filetage complémentaire 7. Les mâchoires 14 sont régulièrement réparties autour de l'axe 10 de la surface cylindrique filetée 12. Les mâchoires 14 sont capables d'un état de freinage dans lequel leur surface de freinage 16 est en appui de freinage contre le filetage complémentaire 7, ce qui empêche la vis 5 et l'écrou 8 de tourner l'un par rapport à l'autre sous l'effet des excitations parasites telles que vibrations, effets inertiels, inversions de charge sur la roue, contraintes thermiques changeantes etc. Les mâchoires 14 sont également capables d'un état de libération dans lequel la pression des surfaces de freinage 16 sur le filetage complémentaire 7 est sensiblement annulée, ce qui autorise la libre rotation relative de la vis 5 et de l'écrou 8.

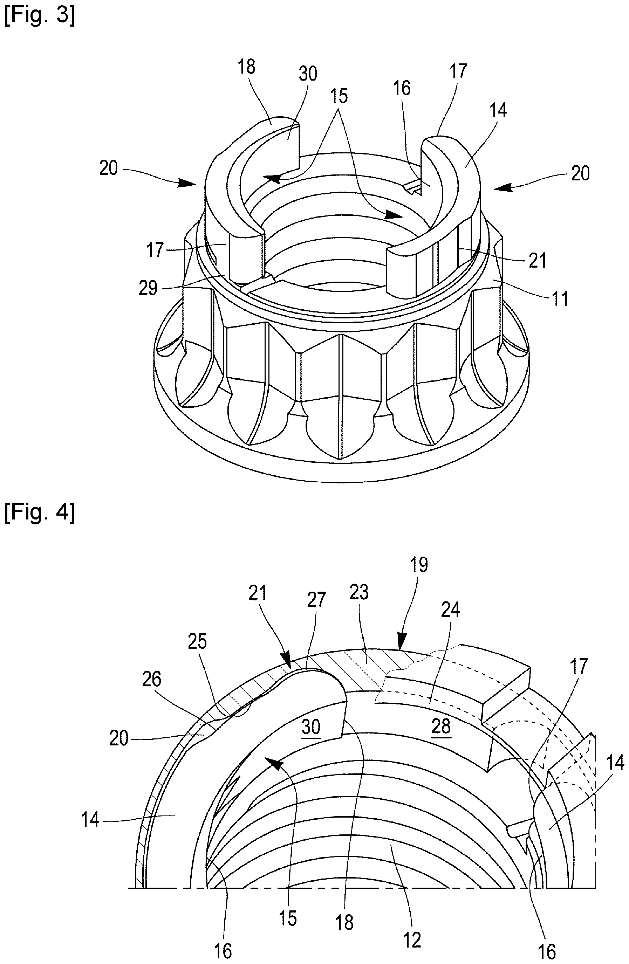

Conformément à l'invention, chaque mâchoire 14 s'étend en direction sensiblement circonférentielle relativement à l'axe 10 de la surface cylindrique 12, entre une extrémité d'attache 17 reliée au corps 11 et une extrémité 18 qui est flottante selon une direction sensiblement radiale. Les mâchoires sont identiques les unes aux autres et toutes orientées dans le même sens circonférentiel à partir de leur extrémité d'attache 17. Dans l'exemple l'extrémité d'attache 17 de chaque mâchoire est reliée rigidement au corps 11 de l'écrou. Plus particulièrement, dans cet exemple, la mâchoire et le corps sont venus d'une seule pièce de matériau en étant reliés ensemble à l'extrémité d'attache 17 de la mâchoire, comme visible à la figure 3. Le changement d'état de la mâchoire, entre les états de libération et de freinage, est autorisé par la flexibilité propre de la mâchoire, entre son extrémité d'attache 17 et son extrémité flottante 18.

Dans l'exemple préféré représenté, les surfaces de freinage 16 appartiennent à la surface cylindrique filetée 12. A l'état de freinage, les surfaces de freinage 16 peuvent ainsi s'emboîter à la perfection contre le filetage complémentaire 7 sans endommager celui-ci. A l'état de libération, la surface de freinage 16 glisse sur le filetage complémentaire dans la même relation cinématique de vissage ou dévissage que la surface cylindrique filetée 12.

Les moyens de freinage 9 comprennent en outre un organe d'actionnement 19 déplaçable entre des positions de freinage et de libération, pour placer sélectivement les mâchoires 14 dans l'état de freinage du mouvement relatif de vissage et dévissage, et respectivement dans l'état de libération du mouvement relatif de vissage et dévissage.

Dans la version représentée, l'organe d'actionnement est configuré pour exercer sur une zone d'interaction 21 de chaque mâchoire 14, prévue sur le côté 20 de la mâchoire opposé à la surface de freinage 16, une force dirigée en service vers le filetage complémentaire 7 pour réaliser l'état de freinage. Le retour des mâchoires 14 en état de libération s'opère par élasticité. Dans l'exemple, l'état de libération est l'état de repos de la mâchoire 14. L'élasticité assurant le retour de la mâchoire de l'état de freinage à l'état de libération est l'élasticité de flexion de la mâchoire.

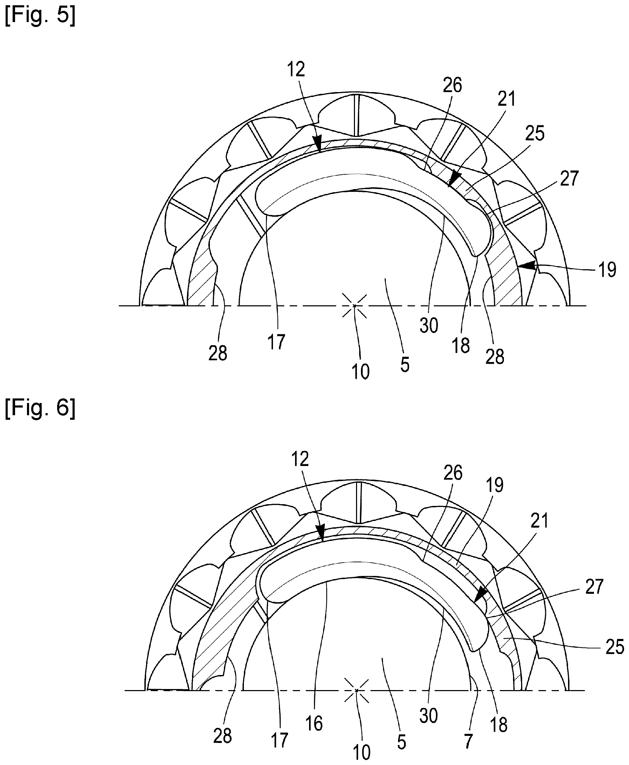

Du moins à l'état de freinage, la surface de freinage 16 de la mâchoire 14 est plus proche de l'extrémité d'attache 17 de la mâchoire que la zone d'interaction 21, comme le montre bien l'observation de la mâchoire de droite à la figure 3. A l'état de freinage, la mâchoire travaille ainsi en flexion entre la surface de freinage 16 et la zone d'interaction 21 (Figure 6). On a ainsi un effet de levier avantageux qui réduit l'effort à appliquer par l'organe d'actionnement 19 sur la mâchoire 14 pour une force pressante voulue entre la surface de freinage 16 et le filetage complémentaire 7. En outre, la zone de flexion entre l'organe d'actionnement 19 et la surface de freinage 16 sert de limiteur de pression entre la surface de freinage 16 et le filetage complémentaire 7. La limitation de pression précitée protège l'ensemble du dispositif de fixation à l'égard des forces excessives qui sinon pourraient être appliquées à l'organe d'actionnement 19 du fait d'une mauvaise manipulation.

Dans l'exemple, l'organe d'actionnement 19 est une bague montée en rotation par rapport au corps 11 autour de l'axe 10 de la surface cylindrique filetée 12. La bague 19 est configurée en capot de protection des mâchoires 14. Les mâchoires occupent un logement annulaire 22 dont la base est définie par le corps 11, le pourtour par la paroi périphérique 23 de la bague 19, et le sommet par un collet supérieur 24 de la bague 19.

La bague 19 et les mâchoires 14 interagissent par des profils de came respectifs conjugués 25, 26 et 27 (Figures 5 et 6).

Dans l'exemple, voir figures 5 et 6, les profils de came de la bague comportent pour chaque mâchoire 14 un bossage 25. En position de libération (figure 5), correspondant à l'état de libération des mâchoires, chaque bossage 25 est en regard d'un creux 26 de la zone d'interaction 21 de l'une respective des mâchoires 14. Les mâchoires sont ainsi autorisées à prendre, par retour élastique, leur état de libération du vissage et du dévissage. En position de freinage (figure 6), correspondant à l'état de freinage des mâchoires, les bossages 25 sont en appui contre un bossage 27 prévu au voisinage de l'extrémité flottante 18 de chaque mâchoire. La mâchoire est alors sollicitée vers le filetage complémentaire 7, de sorte que la surface de freinage 16 des mâchoires prend un appui de freinage sur le filetage complémentaire 7.

Les profils de came 25, 26 et 27 conjugués définissent un point dur pour le mouvement de la bague 19 entre ses positions de freinage et de libération. Comme le montre la figure 6, la bague n'atteint sa position de freinage que lorsque le bossage intérieur 25 de la bague a légèrement dépassé le sommet du bossage 27 de la mâchoire 14. Ceci stabilise l'état de freinage à l'encontre des vibrations et autres perturbations mécaniques.

Dans un mode de réalisation, le dispositif comprend des moyens de butée qui limitent la course de l'organe d'actionnement 19 entre ses positions de freinage et de libération. Dans l'exemple des figures 2 à 6, la bague 19 comporte sur sa paroi latérale intérieure des surépaisseurs 28 intercalées circonférentiellement entre les mâchoires. Les surépaisseurs 28 butent contre les extrémités flottantes 18 des mâchoires à l'état de libération et contre les extrémités d'attache 17 des mâchoires 14 à l'état de freinage. Ces surépaisseurs empêchent les fausses manoeuvres qui consisteraient à déplacer l'organe d'actionnement 19 au-delà de l'une ou l'autre de ses positions de freinage et respectivement de libération.

Comme on peut l'apprécier en observant la figure 3, le corps 11 et les mâchoires 14 sont réalisables d'une seule pièce à partir d'une ébauche comportant le corps 11 et un prolongement tubulaire axial taraudé, puis enlèvement de matière dans le prolongement tubulaire pour n'en laisser subsister que les mâchoires 14 rattachées au corps 11 par un pont de matière 29. Un fraisage 30 évide la face intérieure des mâchoires pour limiter leur face de freinage 16 à une zone proche de l'extrémité d'attache 17 (figures 3 et 4) comme décrit précédemment.

Dans une version la bague 19 présente des moyens de prise 31 (figure 2) pour un outil de rotation, utilisables pour faire tourner la bague 19 par rapport au corps 11 entre les deux positions angulaires de la bague, à savoir les positions de freinage et de libération. Dans cet exemple, les moyens de prise comprennent deux conformations de prise 31 sous la forme d'encoches formées à l'opposé du corps 11.

Dans une version, le dispositif de fixation porte en un seul ensemble autonome le corps 11 avec sa surface cylindrique filetée 12, l'au moins une mâchoire 14 et l'organe d'actionnement 19. A cet effet, la bague 19 est immobilisée axialement par rapport au corps 11, d'une manière non représentée aux figures 2 à 5, mais dont des exemples seront donnés en référence aux figures suivantes.

Dans une version, l'organe d'actionnement 19 est relié de manière permanente au corps 11 ou d'une manière ne permettant le démontage qu'avec un outil, pour être imperdable en utilisation, relativement au corps.

Le sens de rotation de la bague 19 de la position de libération à la position de freinage est avantageusement le sens de vissage de l'écrou, de façon à éviter que l'actionnement de la bague pour passer à l'état freiné après un vissage tende à dévisser l'écrou.

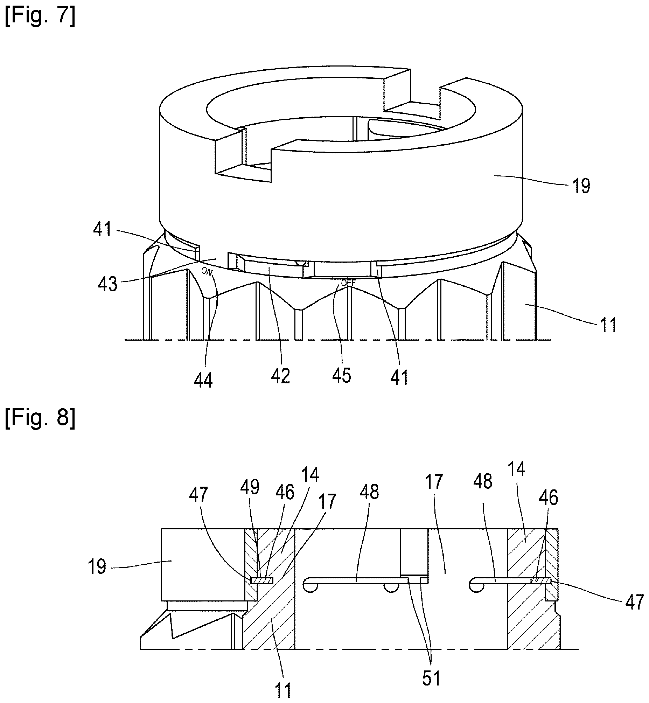

Le mode réalisation de la figure 7, qui ne sera décrit que pour ses différences avec celui des figures 2 à 6, comporte des moyens d'enclenchement pour stabiliser la position de l'organe d'actionnement 19 lorsqu'il n'est pas en cours d'actionnement, et en particulier éviter que l'organe d'actionnement présente un jeu visible par de petits mouvements lorsqu'il n'est pas en train d'être actionné dans un sens ou dans l'autre entre ses positions de libération et respectivement de freinage.

Pour cela, le corps 11 porte deux butées 41 et un bossage 42 placé à michemin entre les deux butées 41. L'organe d'actionnement 19 porte une dent 43. Dans chacune des positions de freinage et respectivement de libération de l'organe d'actionnement 19, la dent 43 est immobilisée entre le bossage 42 et l'une respective des butées 41. Lorsque l'organe d'actionnement est déplacé de l'une à l'autre de ses positions précitées, la dent 43 fléchit élastiquement pour franchir le bossage 42, avec un effet de point dur, puis venir s'enclencher entre la dent 42 et l'autre butée 41.

Lorsque les moyens d'enclenchement sont prévus, les profils de came conjugués 25, 26 et 27 (figures 5 et 6) de la bague 19 et des mâchoires 14 n'ont plus besoin d'assurer la fonction de point dur. Par contre de solides butées comme les surépaisseurs 28 qui empêchent les fausses manoeuvres susceptibles de se produire sous une force ou un couple élevé sont de préférence maintenues.

Dans la réalisation représentée la dent 43 est visible de l'extérieur. Sa position indique l'état de freinage ou respectivement de libération dans lequel se trouve le dispositif de fixation. Le corps 11 porte des repères 44, 45 qui légendent les deux positions possibles.

Le mode de réalisation de la Figure 8, qui ne sera décrit que pour ses différences avec celui des figures 2 à 6, est un exemple pour l'immobilisation axiale de la bague 19 par rapport au corps 11. Un anneau d'arrêt élastique ouvert 46 est inséré dans une rainure périphérique 47 de la paroi intérieure de la bague 19. L'anneau d'arrêt est en même temps inséré dans l'interstice 48 entre le corps 11 et les mâchoires 14 (voir partie droite de la figure 8). Les extrémités d'attache 17 des mâchoires, qui interrompent l'interstice 48, comportent en regard de la rainure 47 une rainure 49 (partie gauche de la figure 8) recevant elle aussi l'anneau d'arrêt.

L'anneau d'arrêt 46 est ouvert et comporte ainsi deux extrémités 51. De préférence les deux extrémités 51 sont situées dans un intervalle circonférentiel entre les deux mâchoires et conformées pour venir en butée de mouvement circonférentiel contre les deux mâchoires, de façon que l'anneau d'arrêt soit sensiblement immobilisé à l'encontre des rotations relativement au corps 11.

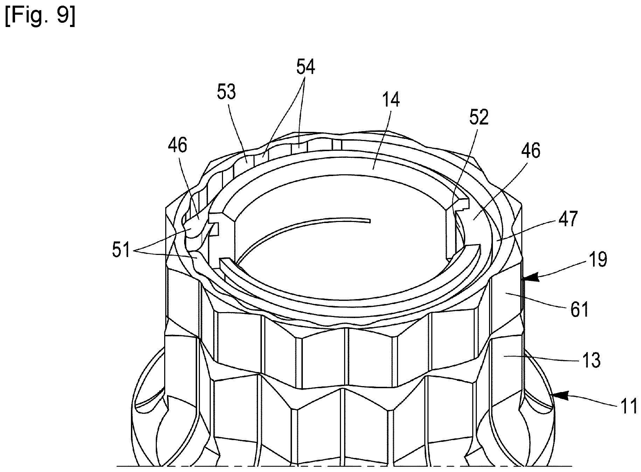

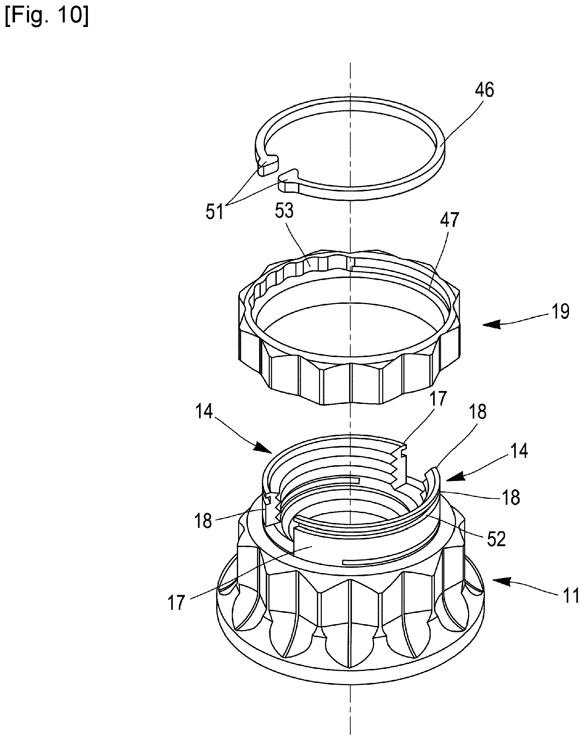

Dans le mode de réalisation des figures 9 à 12, qui ne sera décrit que pour ses différences avec le précédent, l'anneau d'arrêt 46 est logé comme précédemment dans un rainure périphérique 47 de la face intérieure de la paroi périphérique de la bague 19. Mais cette rainure se trouve maintenant face à une rainure périphérique 52 formée dans les mâchoires 14. Les extrémités 51 de l'anneau d'arrêt sont maintenant également saillantes radialement vers l'extérieur dans un évidement 53 de la bague 19. La dimension circonférentielle de l'évidement 53 limite ainsi la course angulaire de la bague 19 par rapport au corps 11. L'évidement 53 comporte au moins un bossage 54 que les extrémités de prise 51 peuvent franchir par élasticité de l'anneau 46, ce franchissement générant un effet de point dur.

Dans la réalisation de la figure 9, le pourtour extérieur de la bague 19 comporte le même profil de conformation de prise de rotation 61 que celles 13 du corps 11. Il est fait en sorte qu'à l'état de libération lesdites conformations de prise se correspondent axialement pour être simultanément en prise avec l'outil de rotation.

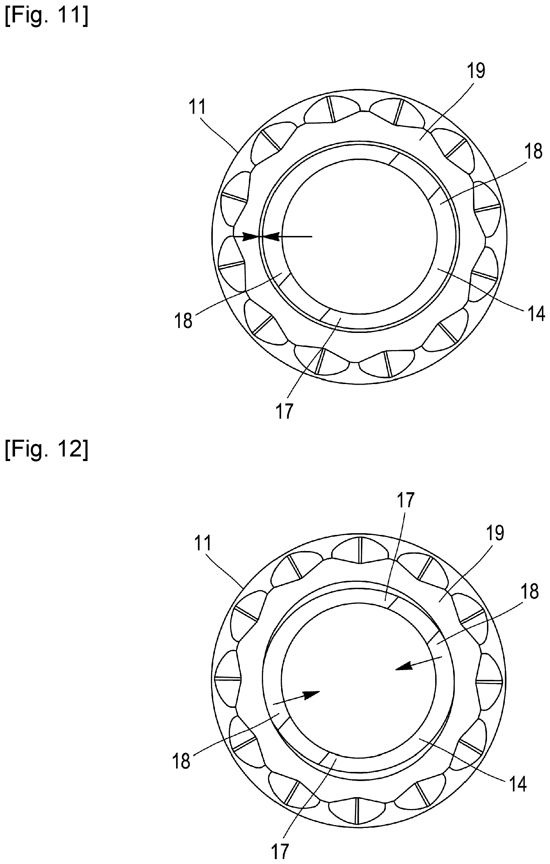

Dans cette réalisation, comme le montrent les figures 11 et 12, les profils de came de la bague 19 et de la mâchoire 14 appartiennent à une ellipse respective centrée sur l'axe 10. Sur le corps 11, donc plus précisément ici sur les mâchoires 14, le grand axe de l'ellipse passe sensiblement par les extrémités flottantes 18 des. La différence entre le grand axe et le petit axe de ces ellipses est par exemple de 1mm. A la figure 11 les grands axes sont superposés ce qui permet aux mâchoires de se placer en état de libération. A la figure 12 le petit axe de la bague 19 a été rapproché des extrémités flottantes 18 situées sur le grand axe, ce qui comprime les mâchoires en état de freinage.

Dans cette réalisation le freinage est défini par un effort appliqué sur les mâchoires directement derrière la surface de freinage. Il n'y a plus de distance circonférentielle entre la surface de freinage et la zone d'interaction de la bague et de la mâchoire. L'effort optimal correspond à un couple prescrit à appliquer sur la bague 19. Grâce à la surface bosselée (bosses 54 à la figure 9) contre laquelle circulent les extrémités 51 de l'anneau d'arrêt 46, la position angulaire optimale de la bague à l'état de freinage est stabilisée quelle qu'elle soit.

Dans cette réalisation les mâchoires peuvent être plus minces en direction radiale, ce qui permet à la bague d'actionnement 19 d'être radialement plus épaisse. Cette épaisseur facilite la réalisation d'évidements 53 relativement profonds et donc plus efficaces pour le contrôle des mouvements de l'organe d'actionnement 19

Bien entendu l'invention n'est pas limitée aux exemples décrits et représentés.

Les particularités des différentes réalisations peuvent donner lieu à d'autres combinaisons.

Par exemple, on pourrait utiliser l'anneau d'arrêt 46 de la figure 9 en combinaison avec un évidement tel que 53 mais ne comportant qu'une seule bosse 54 séparant avec effet de point dur une position angulaire de freinage et une position angulaire de libération bien déterminées, le tout en combinaison avec des mâchoires du type de celles des figures 2 à 6, mais actionnées par l'intermédiaire de profils de came conjugués ne produisant pas nécessairement d'effet de point dur.

L'organe d'actionnement 19 des modes de réalisation des figures 1 à 8 pourrait comporter des conformations de prise telles que 61 des figures 9 à 12, et inversement l'organe d'actionnement 19 des figures 9 à 12 pourrait comporter des conformations de prise telles que 31 des figures 1 à 8. D'autres modes de réalisation des conformations de prise sont encore possibles.

Le système d'enclenchement 41-43 et/ou les repérages 44, 45, associés comme décrit ou autrement, ou pas associés, sont réalisables de différentes façons, et sont applicables à tous les modes de réalisation.

Le dispositif de freinage est applicable à une pièce filetée autre qu'un écrou.

## Revendications

1. Dispositif de fixation par vissage avec freinage à l'état vissé, comprenant :
- un corps (11) présentant une surface cylindrique filetée (12) destinée à venir en prise de filetage avec un filetage complémentaire (7) ;
- au moins une mâchoire (14) reliée au moins indirectement au corps et présentant une surface de freinage (16) sur son côté (20) tourné en service vers le filetage complémentaire (7), configurée et positionnée pour venir en appui de freinage sur le filetage complémentaire, l'au moins une mâchoire (14) s'étendant en direction sensiblement circonférentielle relativement à l'axe (10) de la surface cylindrique (12), entre une extrémité d'attache (17) reliée au corps et une extrémité (18) qui est flottante selon une direction sensiblement radiale ; et
- un organe d'actionnement (19) déplaçable entre des positions de freinage et de libération, pour placer sélectivement la mâchoire (14) dans un état de freinage où la surface de freinage (16) exerce une pression de freinage sur le filetage complémentaire (7), et respectivement dans un état de libération du mouvement relatif de vissage et dévissage ; **caractérisé en ce que** l'organe d'actionnement est une bague (19) montée en rotation par rapport au corps (11) autour de l'axe (10) de la surface cylindrique filetée (12).

2. Dispositif selon la revendication 1, **caractérisé en ce que** l'organe d'actionnement (19) est configuré pour exercer sur un côté (15) de la mâchoire opposé à la surface de freinage (16) une force dirigée en service vers le filetage complémentaire (7), le retour de la mâchoire en état de libération s'opérant par élasticité.

3. Dispositif selon la revendication 1 ou 2, **caractérisé en ce que** l'organe d'actionnement (19) sollicite la mâchoire (14) en flexion pour le passage de l'état de libération à l'état de freinage.

4. Dispositif selon la revendication 1 ou 2, **caractérisé en ce qu'**au moins à l'état de freinage la surface de freinage (16) de la mâchoire est plus proche de l'extrémité d'attache (12) de la mâchoire qu'une zone d'interaction (21) entre la mâchoire (14) et l'organe d'actionnement (19) de façon à faire travailler la mâchoire en flexion entre la surface de freinage (16) et la zone d'interaction (21) lorsque la mâchoire est à l'état de freinage.

5. Dispositif selon l'une des revendications 1 à 4, **caractérisé en ce que** l'extrémité d'attache (17) de la mâchoire est reliée rigidement au corps (11).

6. Dispositif selon l'une des revendications 1 à 5, **caractérisé en ce que** la mâchoire (14) et le corps (11) sont venus d'une seule pièce de matériau en étant reliés ensemble à l'extrémité d'attache (17) de la mâchoire.

7. Dispositif selon l'une des revendications 1 à 6, **caractérisé en ce que** la surface de freinage (16) de la mâchoire appartient à la surface cylindrique filetée (12).

8. Dispositif selon l'une des revendications 1 à 7, **caractérisé en ce que** l'organe d'actionnement (14) est relié de manière permanente au corps (11) ou d'une manière ne permettant le démontage qu'avec un outil, pour être imperdable en utilisation, relativement au corps.

9. Dispositif selon l'une des revendications 1 à 8, **caractérisé en ce que** la bague (19) est configurée en capot de protection de la mâchoire (14).

10. Dispositif selon l'une des revendications 1 à 9, **caractérisé en ce que** la bague (14) est maintenue axialement relativement au corps (11) au moyen d'un anneau d'arrêt (46).

11. Dispositif selon la revendication 10, **caractérisé en ce que** l'anneau d'arrêt comporte deux extrémités (51) conformées pour venir en butée de mouvement circonférentiel contre l'au moins une mâchoire (14), de façon que l'anneau d'arrêt soit sensiblement immobilisé à l'encontre des rotations relativement au corps (11).

12. Dispositif selon la revendication 10 ou 11, **caractérisé en ce que** pour son positionnement axial relativement au corps (11) l'anneau d'arrêt (46) se loge partiellement dans un interstice (48) ménagé entre la mâchoire (14) et le corps (11).

13. Dispositif selon l'une des revendications 1 à 10, **caractérisé en ce que** l'anneau d'arrêt (46) est immobilisé à l'encontre des rotations par rapport à l'un du corps (11) et de la bague (19), et comporte au moins une saillie (51) qui coopère avec au moins un évidement (53) prévu dans l'autre du corps et de la bague, de façon à limiter la course angulaire de la bague (19) par rapport au corps (11).

14. Dispositif selon la revendication 13, **caractérisé en ce que** l'évidement (53) comporte au moins une bosse (54) que la saillie (51) peut franchir par élasticité de l'anneau d'arrêt avec un effet de point dur.

15. Dispositif selon l'une des revendications 1 à 14, **caractérisé en ce que** la bague (19) et la mâchoire (14) interagissent par des profils de came (25, 26, 27) respectifs conjugués.

16. Dispositif selon la revendication 15, **caractérisé en ce que** le profil de came de l'un au moins de la bague (19) et de la mâchoire (14) appartient à une ellipse respective centrée sur l'axe (10) de la surface cylindrique filetée (12).

17. Dispositif selon la revendication 15, **caractérisé en ce que** les profils conjugués (25, 26, 27) définissent un point dur pour le mouvement de la bague (19) entre ses positions de freinage et de libération.

18. Dispositif selon l'une des revendications 1 à 15, **caractérisé en ce que** le mouvement de l'organe d'actionnement (19) entre les positions de freinage et de libération passe par au moins un point dur de façon à stabiliser l'état freiné de la mâchoire (14) à l'égard des excitations mécaniques telles que vibrations et effets inertiels susceptibles de survenir en service.

19. Dispositif selon l'une des revendications 1 à 18, **caractérisé en ce qu'**il comprend un système d'enclenchement (41, 42, 43) qui stabilise l'organe d'actionnement (19) dans chacune de ses positions, de freinage et respectivement de libération, à l'encontre des excitations mécaniques parasites.

20. Dispositif selon la revendication 19, **caractérisé en ce que** le système d'enclenchement comprend une dent (43), qui se déplace entre deux butées (41) coopérant avec la dent pour délimiter la course de l'organe d'actionnement (19) par rapport au corps (11), et entre les deux butées un bossage (42) que la dent (43) peut franchir par déformation élastique avec un effet de point dur.

21. Dispositif selon l'une des revendications 1 à 18, **caractérisé en ce qu'**il comprend des moyens de butée (28, 43) qui limitent la course de l'organe d'actionnement (19) dans ses déplacements lui permettant d'occuper les positions de freinage et de libération.

22. Dispositif selon la revendication 21, **caractérisé en ce que** les moyens de butée comprennent au moins une surépaisseur (28) de l'organe d'actionnement (19), intercalée entre deux extrémités de mâchoire (14).

23. Dispositif selon l'une des revendications 1 à 22, **caractérisé en ce qu'**il comprend des moyens (44, 45) indicateurs de la position de l'organe d'actionnement (19).

24. Dispositif selon l'une des revendications 1 à 23, **caractérisé en ce que** ledit dispositif de fixation est un écrou.

25. Dispositif selon la revendication 24, **caractérisé en ce que** le corps (11) comporte une paroi tubulaire portant intérieurement la surface cylindrique filetée (12), et **en ce que** l'au moins une mâchoire (14) est au moins en partie définie par enlèvement de matière dans ladite paroi tubulaire.

26. Dispositif selon l'une des revendications 1 à 25, **caractérisé en ce que** ledit dispositif de fixation porte en seul ensemble autonome le corps (11) avec sa surface cylindrique filetée (12), l'au moins une mâchoire (14) et l'organe d'actionnement (19).

27. Dispositif selon l'une des revendications 1 à 26, **caractérisé en ce que** l'au moins une mâchoire comprend plusieurs mâchoires (14) réparties autour de l'axe (10) de la surface cylindrique filetée (12), l'organe d'actionnement (14) étant commun à toutes les mâchoires.

## Patentansprüche

1. Schraubbefestigungsvorrichtung mit Sicherung im verschraubten Zustand, der das Folgende aufweist:
- einen Körper (11) mit einer zylindrischen Gewindefläche (12), die dazu bestimmt ist, mit einem Gegengewinde (7) in Gewindeeingriff zu gelangen;
- zumindest eine Backe (14), die zumindest indirekt mit dem Körper verbunden ist und auf ihrer Seite (20), die im Betrieb dem Gegengewinde (7) zugewandt ist, eine Sicherungsfläche (16) aufweist, die so ausgelegt und positioniert ist, dass sie in Sicherungsanlage an das Gegengewinde gelangt, wobei sich die zumindest eine Backe (14) im Wesentlichen in Umfangsrichtung relativ zur Achse (10) der zylindrischen Fläche (12) zwischen einem mit dem Körper verbundenen Befestigungsende (17) und einem in einer im Wesentlichen radialen Richtung freiliegen Ende (18) erstreckt; und
- ein Betätigungsorgan (19), das zwischen einer Sicherungs- und einer Freigabeposition verstellbar ist, um die Backe (14) selektiv in einen Sicherungszustand, in dem die Sicherungsfläche (16) einen Sicherungsdruck auf das Gegengewinde (7) ausübt, bzw. in einen Freigabezustand zum Freigeben der relativen Anzieh- und Lösebewegung zu versetzen; **dadurch gekennzeichnet, dass** das Betätigungsorgan ein Ring (19) ist, der bezüglich des Körpers (11) um die Achse (10) der zylindrischen Gewindefläche (12) drehbar gelagert ist.

2. Vorrichtung nach Anspruch 1, **dadurch gekennzeichnet, dass** das Betätigungsorgan (19) dazu ausgelegt ist, auf eine der Sicherungsfläche (16) entgegengesetzte Seite (15) der Backe eine Kraft auszuüben, die im Betrieb auf das Gegengewinde (7) gerichtet ist, wobei die Rückstellung der Backe in den Freigabezustand durch Elastizität erfolgt.

3. Vorrichtung nach Anspruch 1 oder 2, **dadurch gekennzeichnet, dass** das Betätigungsorgan (19) die Backe (14) für den Übergang vom Freigabezustand in den Sicherungszustand unter Biegung beaufschlagt.

4. Vorrichtung nach Anspruch 1 oder 2, **dadurch gekennzeichnet, dass** zumindest im Sicherungszustand die Sicherungsfläche (16) der Backe näher am Befestigungsende (12) der Backe liegt als ein Wechselwirkungsbereich (21) zwischen Backe (14) und Betätigungsorgan (19), so dass die Backe zwischen der Sicherungsfläche (16) und dem Wechselwirkungsbereich (21) auf Biegung beansprucht wird, wenn die Backe im Sicherungszustand ist.

5. Vorrichtung nach einem der Ansprüche 1 bis 4, **dadurch gekennzeichnet, dass** das Befestigungsende (17) der Backe starr mit dem Körper (11) verbunden ist.

6. Vorrichtung nach einem der Ansprüche 1 bis 5, **dadurch gekennzeichnet, dass** die Backe (14) und der Körper (11) stoffschlüssig aus einem Stück gefertigt sind, wobei sie am Befestigungsende (17) der Backe miteinander verbunden sind.

7. Vorrichtung nach einem der Ansprüche 1 bis 6, **dadurch gekennzeichnet, dass** die Sicherungsfläche (16) der Backe zu der zylindrischen Gewindefläche (12) gehört.

8. Vorrichtung nach einem der Ansprüche 1 bis 7, **dadurch gekennzeichnet, dass** das Betätigungsorgan (14) mit dem Körper (11) verbunden ist, und zwar dauerhaft oder auf eine Weise, die eine Demontage nur mit einem Werkzeug zulässt, damit es im Gebrauch relativ zum Körper unverlierbar ist.

9. Vorrichtung nach einem der Ansprüche 1 bis 8, **dadurch gekennzeichnet, dass** der Ring (19) als Schutzkappe für die Backe (14) ausgebildet ist.

10. Vorrichtung nach einem der Ansprüche 1 bis 9, **dadurch gekennzeichnet, dass** der Ring (14) mittels eines Sicherungsrings (46) axial relativ zum Körper (11) gehalten wird.

11. Vorrichtung nach Anspruch 10, **dadurch gekennzeichnet, dass** der Sicherungsring zwei Enden (51) aufweist, die so ausgelegt sind, dass sie bei Umfangsbewegung in Anschlag gegen die zumindest eine Backe (14) gelangen, so dass der Sicherungsring im Wesentlichen drehfest zum Körper (11) festgelegt wird.

12. Vorrichtung nach Anspruch 10 oder 11, **dadurch gekennzeichnet, dass** der Sicherungsring (46) für seine axiale Positionierung relativ zum Körper (11) teilweise in einen Zwischenraum (48) eingreift, der zwischen der Backe (14) und dem Körper (11) ausgebildet ist.

13. Vorrichtung nach einem der Ansprüche 1 bis 10, **dadurch gekennzeichnet, dass** der Sicherungsring (46) drehfest zu einem aus Körper (11) und Ring (19) festgelegt ist und zumindest einen Vorsprung (51) aufweist, der mit zumindest einer Aussparung (53), die in dem anderen aus Körper und Ring vorgesehen ist, zusammenwirkt, um den Winkelverstellweg des Rings (19) relativ zu dem Körper (11) zu begrenzen.

14. Vorrichtung nach Anspruch 13, **dadurch gekennzeichnet, dass** die Aussparung (53) zumindest eine Erhebung (54) aufweist, welche der Vorsprung (51) durch Elastizität des Sicherungsrings unter Schwergängigkeit überwinden kann.

15. Vorrichtung nach einem der Ansprüche 1 bis 14, **dadurch gekennzeichnet, dass** der Ring (19) und die Backe (14) über jeweils korrespondierende Nockenprofile (25, 26, 27) zusammenwirken.

16. Vorrichtung nach Anspruch 15, **dadurch gekennzeichnet, dass** das Nockenprofil von zumindest einem aus Ring (19) und Backe (14) zu einer jeweiligen Ellipse gehört, die auf der Achse (10) der zylindrischen Gewindefläche (12) zentriert ist.

17. Vorrichtung nach Anspruch 15, **dadurch gekennzeichnet, dass** die korrespondierenden Profile (25, 26, 27) eine Schwergängigkeit für die Verlagerung des Rings (19) zwischen seiner Sicherungs- und seiner Freigabeposition bewirken.

18. Vorrichtung nach einem der Ansprüche 1 bis 15, **dadurch gekennzeichnet, dass** die Verlagerung des Betätigungsorgans (19) zwischen der Sicherungs- und der Freigabeposition unter zumindest einer Schwergängigkeit erfolgt, um den Sicherungszustand der Backe (14) gegenüber mechanischen Anregungen wie Vibrationen und Trägheitseffekten, die im Betrieb auftreten können, zu stabilisieren.

19. Vorrichtung nach einem der Ansprüche 1 bis 18, **dadurch gekennzeichnet, dass** sie ein Einrastsystem (41, 42, 43) umfasst, welches das Betätigungsorgan (19) in jeder seiner Positionen, der Sicherungsposition bzw. der Freigabeposition, gegenüber mechanischen Störanregungen stabilisiert.

20. Vorrichtung nach Anspruch 19, **dadurch gekennzeichnet, dass** das Einrastsystem einen Zahn (43) umfasst, der sich zwischen zwei mit dem Zahn zusammenwirkenden Anschlägen (41) verlagert, um den Verstellweg des Betätigungsorgans (19) in Bezug auf den Körper (11) zu begrenzen, sowie zwischen den beiden Anschlägen eine Verdickung (42), die der Zahn (43) durch elastische Verformung unter Schwergängigkeit überwinden kann.

21. Vorrichtung nach einem der Ansprüche 1 bis 18, **dadurch gekennzeichnet, dass** sie Anschlagmittel (28, 43) umfasst, die den Verstellweg des Betätigungsorgans (19) bei seinen Verlagerungen begrenzen, durch die er die Sicherungs- und die Freigabeposition einnehmen kann.

22. Vorrichtung nach Anspruch 21, **dadurch gekennzeichnet, dass** die Anschlagmittel zumindest eine Überdicke (28) des Betätigungsorgans (19) umfassen, die zwischen zwei Backenenden (14) eingefügt ist.

23. Vorrichtung nach einem der Ansprüche 1 bis 22, **dadurch gekennzeichnet, dass** sie Mittel (44, 45) umfasst, die die Position des Betätigungsorgans (19) angeben.

24. Vorrichtung nach einem der Ansprüche 1 bis 23, **dadurch gekennzeichnet, dass** die Befestigungsvorrichtung eine Mutter ist.

25. Vorrichtung nach Anspruch 24, **dadurch gekennzeichnet, dass** der Körper (11) eine rohrförmige Wand aufweist, die innen die zylindrische Gewindefläche (12) trägt, und dass die zumindest eine Backe (14) zumindest teilweise durch Materialabtragung in der rohrförmigen Wand ausgebildet ist.

26. Vorrichtung nach einem der Ansprüche 1 bis 25, **dadurch gekennzeichnet, dass** die Befestigungsvorrichtung den Körper (11) mit seiner zylindrischen Gewindefläche (12), die zumindest eine Backe (14) und das Betätigungsorgan (19) als eine einzelne, eigenständige Einheit trägt.

27. Vorrichtung nach einem der Ansprüche 1 bis 26, **dadurch gekennzeichnet, dass** die zumindest eine Backe mehrere Backen (14) umfasst, die um die Achse (10) der zylindrischen Gewindefläche (12) verteilt sind, wobei das Betätigungsorgan (14) allen Backen gemeinsam ist.

## Claims

1. A threaded fastening device, with locking in the screwed state, comprising:
- a body (11) having a threaded cylindrical surface (12) intended to threadingly engage a complementary thread (7);
- at least one jaw (14) connected at least indirectly to the body and having a locking surface (16) on its side (20) turned in use towards the complementary thread (7), configured and positioned to come into locking abutment against the complementary thread, the at least one jaw (14) extending in a direction that is substantially circumferential with respect to the axis (10) of the cylindrical surface (12), between an attachment end (17) connected to the body and an end (18) which is floating in a substantially radial direction; and
- an actuation element (19) that can be moved between a locking and a release position, to selectively place the jaw (14) in a locking state in which the locking surface (16) exerts a locking pressure onto the complementary thread (7), and respectively in a release state of the relative screwing and unscrewing movement; **characterized in that** the actuation element is an actuation ring (19) mounted in rotation with respect to the body (11) about the axis (10) of the threaded cylindrical surface (12).

2. The device according to claim 1, **characterized in that** the actuation element (19) is configured to exert on a side (15) of the jaw facing away from the locking surface (16), a force directed in use towards the complementary thread (7), the return of the jaw to the release state being carried out by elasticity.

3. The device according to claim 1 or 2, **characterized in that** the actuation element (19) urges the jaw (14) by bending to pass from the release state to the locking state.

4. The device according to claim 1 or 2, **characterized in that** at least in the locking state, the locking surface (16) of the jaw is closer to the attachment end (12) of the jaw than an interaction area (21) between the jaw (14) and the actuation element (19), so as to cause the jaw to undergo flexural strain between the locking surface (16) and the interaction area (21) when the jaw is in the locking state.

5. The device according to one of claims 1 to 4, **characterized in that** the attachment end (17) of the jaw is rigidly connected to the body (11).

6. The device according to one of claims 1 to 5, **characterized in that** the jaw (14) and the body (11) are made from a single piece of material, while being connected together at the attachment end (17) of the jaw.

7. The device according to one of claims 1 to 6, **characterized in that** the locking surface (16) of the jaw belongs to the threaded cylindrical surface (12).

8. The device according to one of claims 1 to 7, **characterized in that** the actuation element (19) is permanently connected to the body (11) or in a manner forbidding disassembly except with a tool, so as to be unable to be lost in use, with respect to the body.

9. The device according to one of claims 1 to 8, **characterized in that** the actuation ring (19) is configured as a protective cover protecting the jaw (14).

10. The device according to one of claims 1 to 9, **characterized in that** the actuation ring (19) is held axially with respect to the body (11) by means of a retaining ring (46).

11. The device according to claim 10, **characterized in that** the retaining ring includes two ends (51) shaped to come into abutment against the at least one jaw (14) by circumferential movement, so that the retaining ring is substantially immobilized against rotations with respect to the body (11).

12. The device according to claim 10 or 11, **characterized in that** for its axial positioning with respect to the body (11), the retaining ring (46) is partially housed in a void (48) arranged between the jaw (14) and the body (11).

13. The device according to one of claims 1 to 10, **characterized in that** the retaining ring (46) is immobilized against rotations with respect to one of the body (11) and the actuation ring (19), and includes at least one projection (51) which cooperates with at least one recess (53) provided in the other one of the body and the actuation ring, so as to limit the angular travel of the actuation ring (19) with respect to the body (11).

14. The device according to claim 13, **characterized in that** the recess (53) includes at least one boss (54) that the projection (51) can pass by elasticity of the retaining ring with a hard point effect.

15. The device according to one of claims 1 to 14, **characterized in that** the actuation ring (19) and the jaw (14) interact by means of respective conjugate cam profiles (25, 26, 27).

16. The device according to claim 15, **characterized in that** the cam profile of at least one of the actuation ring (19) and the jaw (14) belongs to a respective ellipse centred on the axis (10) of the threaded cylindrical surface (12).

17. The device according to claim 15, **characterized in that** the conjugate cam profiles (25, 26, 27) define a hard point for the movement of the actuation ring (19) between its locking and release positions.

18. The device according to one of claims 1 to 15, **characterized in that** the movement of the actuation element (19) between the locking and release positions passes by at least one hard point so as to stabilize the locked state of the jaw (14) against mechanical excitations such as vibrations and inertial effects capable of occurring in use.

19. The device according to one of claims 1 to 18, **characterized in that** it comprises an interlock system (41, 42, 43) which stabilizes the actuation element (19) in each of its positions, locking and respectively release, against unwanted mechanical excitations.

20. The device according to claim 19, **characterized in that** the interlock system comprises a tooth (43), which is displaced between two stops (41) cooperating with the tooth to delimit the travel of the actuation element (19) with respect to the body (11), and between the two stops of a boss (42) that the tooth (43) can pass by elastic deformation with a hard point effect.

21. The device according to one of claims 1 to 18, **characterized in that** it comprises stop means (28, 43) which limit the travel of the actuation element (19) in its displacements into the locking and release positions.

22. The device according to claim 21, **characterized in that** the stop means comprise at least one overthickness (28) of the actuation element (19), protruding between two jaw ends.

23. The device according to one of claims 1 to 22, **characterized in that** it comprises means (44, 45) indicating the position of the actuation element (19).

24. The device according to one of claims 1 to 23, **characterized in that** said fastening device is a nut.

25. The device according to claim 24, **characterized in that** the body (11) includes a tubular wall internally provided with the threaded cylindrical surface (12), and **in that** the at least one jaw (14) is at least partly defined by material removal from said tubular wall.

26. The device according to one of claims 1 to 25, **characterized in that** said fastening device incorporates, in a single independent assembly, the body (11) with its threaded cylindrical surface (12), the at least one jaw (14) and the actuation element (19).

27. The device according to one of claims 1 to 26, **characterized in that** the at least one jaw comprises several jaws (14) distributed about the axis (10) of the threaded cylindrical surface (12), the actuation element (19) being common to all the jaws.
